# EUROPEAN PATENT SPECIFICATION

(11) **EP 1 860 358 B1**
(45) Date of publication and mention of the grant of the patent: **21.04.2010**
(21) Application number: 05754850.5
(22) Date of filing: 23.06.2005
(51) Int. Cl.: F16K 11/22, F16K 1/00

(54) **UPWARDLY AND DOWNDWARDLY DISCHARGED FAUCET**
NACH OBEN UND NACH UNTEN GERICHTETER AUSLASS
ROBINET S' ECOULANT VERS LE HAUT ET VERS LE BAS

(30) Priority: 20.12.2004 CN 200410098854
(43) Date of publication of application: 28.11.2007
(73) Proprietor: Lin, Bigui, Fengtai District Beijing (CN); Wang, Xilong, Fengtai District Beijing (CN)
(72) Inventor: Lin, Bigui, Fengtai District Beijing (CN); Wang, Xilong, Fengtai District Beijing (CN)
(74) Representative: Schüssler, Andrea
(86) International application number: PCT/CN2005/000900
(87) International publication number: WO 2006/066472

(56) References cited:
- EP-A- 0 787 863
- CA-A1- 2 217 403
- CN-Y- 2 260 205
- CN-Y- 2 324 340
- CN-Y- 2 352 783
- CN-Y- 2 525 324
- GB-A- 1 353 969
- US-A- 3 079 088
- US-A- 5 931 181
- US-A1- 2003 132 306
- US-B1- 6 367 707

## Description

### Technical Field

The invention relates to a faucet, especially an upwardly and downwardly discharged faucet. It fall into the technical field of "multi-port valve" in International Patent Classification F16K11/00.

### Background Technology

In the existing technique, a faucet generally has only one downward outlet, causing that one washes face and drinks water in a limited posture. In particular, one can not make a waterspout spray to his face directly in a scientific way when washing face. Otherwise, in other cases, it is difficult to use such faucets conveniently and comfortably. Document US 2003/0 132 306 A1 discloses an upwardly and downwardly discharged faucet.

### Disclosure of Invention

An object of the invention is to novelly provide an upwardly and downwardly discharged faucet which can be upwardly and downwardly discharged, is novel, convenient, easy and handy to use.

The object of the invention is achieved by the following techniques.

The invention provides an upwardly and downwardly discharged faucet comprising a main handle and a main valve body having a main water aqueduct. The main valve body is provided with a diverting valve with dual ports, the diverting valve comprises a valve seat mounted on the main valve body. On the bottom side wall of the valve seat are mounted a left inlet and right inlet which are in communication with the main water aqueduct, respectively. Within the valve chamber is disposed a diverting valve core, in which an upper water conduit and a lower water conduit are disposed. The upper water conduit is in adjustable communication with the right inlet, and the lower water conduit is in adjustable communication with the left inlet. The outlet of the lower water conduit is in communication with the bottom of the chamber. On the upper end of the diverting valve core is provided a rotary valve stem. The rotary valve stem has a pusher dog at its bottom end which is fitted with the diverting valve core. The outside wall of the middle section of the rotary valve stem is fitted with the inside wall of the valve seat. The rotary valve stem is equipped with a manual wheel on its outside wall, the manual wheel having a water-storage cavity. The water-storage cavity at its top is provided with an upper water drainage head having at least one spurt hole. In the rotary valve stem is disposed a water conduit. The water inlet of the water conduit is in communication with the upper water conduit, and the water outlet of the water conduit is in communication with the water-storage cavity. The chamber is disposed with a liquid outlet in its bottom; the liquid outlet is in communication with the lower water outlet of the main water aqueduct.

The invention provides an upwardly and downwardly discharged faucet, in which said diverting valve core comprises a dynamic valve core and a static valve core, the dynamic valve core is rotatably mounted within the said chamber. The upper end face of the dynamic valve core is fitted with the lower end face of the said rotary valve stem, on its fitting face is disposed a sealer. The dynamic valve core has grooves on its top which are fitted with the said pusher dog. The static valve core is installed immobily within the said chamber. The dynamic valve core and the static valve core are made of ceramic materials.

The invention provides an upwardly and downwardly discharged faucet, in which the middle of outside wall of said valve seat has threads, the valve seat is installed on the said valve body by thread connection, the outside wall of the valve seat has a flange above its thread section, the side wall above the flange is a hexagon. The upper end face of flange is closely fitted with said manual wheel; a lubricating gasket is disposed between its fitting faces.

The invention provides an upwardly and downwardly discharged faucet, in which the said manual wheel and the said rotary valve stem are connected by spline engaging, the outside wall of the upper section of rotary valve stem is rotatably disposed with a nut, the lower end face of the nut is fitting closely with the manual wheel.

The invention provides an upwardly and downwardly discharged faucet, in which the said upper water drainage head is installed on the top of the manual wheel by thread connection, the lower end face of the upper water drainage head is disposed with a filter disk, the lower end face of the filter disk is disposed with a spring.

The invention provides an upwardly and downwardly discharged faucet, in which the said manual wheel is rotatably disposed with a round locking nut, the upper end face of the round locking nut is supported against the said upper water drainage head, and the outside face of the upper water drainage head is knurled.

The invention provides an upwardly and downwardly discharged faucet, in which the said manual wheel is also disposed with a lever on its outside face, the said main valve body is disposed with an upper water spurt mark and a lower water flow mark respectively. The upper water spurt mark and the lower water flow mark correspond to the two extreme positions of the said lever.

The invention provides an upwardly and downwardly discharged faucet, in which a rubber sealing ring is mounted at the said liquid outlet.

Compared with the existing faucet, in use of the upwardly and downwardly discharged faucet of the invention, the main handle on the main valve body can be opened first such that tap water flows to the left inlet and right inlet along the main water aqueduct within the main valve body. Then the manual wheel is turned, thereby driving the rotary valve turning. The pusher dog on the bottom end of rotary valve stem pushes the diverting valve core 8, and thus the upper water conduit is in communication with the right water inlet, or the lower water conduit is in communication with the left water inlet. Then, the tap water enters into the water conduit along the upper water conduit, and enters into the water-storage chamber from the water conduit. At last, from spurt hole of the upper water drainage head spurts out tap water which can be spurred to the face of user to wash face scientifically and reduce the waste of water resource.

### Brief Description of the Drawings

Figure 1 is a sectional front view of structural schematic diagram of an upwardly and downwardly discharged faucet according to the invention;
Figure 2 is a top view of Figure 1;
Figure 3 is a sectional front view of a diverting valve with dual ports according to the invention;
Figure 4 is a sectional view of Figure 3 taken along the A-A;
Figure 5 is a sectional view of Figure 3 taken along the B-B;
Figure 6 is a sectional view of Figure 3 taken along the C-C;
Figure 7 is a sectional view of Figure 3 taken along the D-D; and

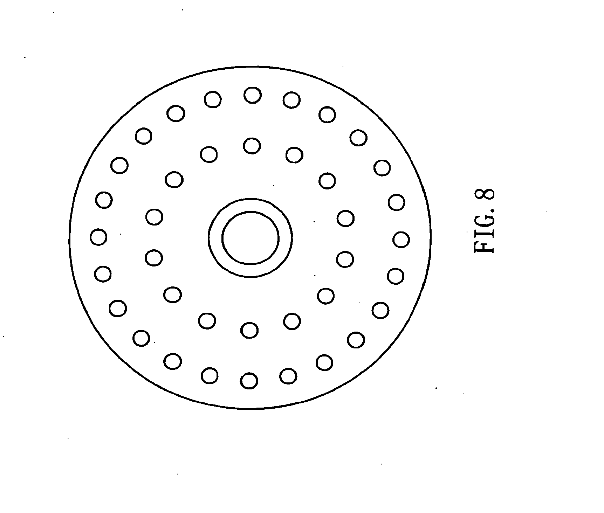

Figure 8 is a sectional view of Figure 3 taken along the E-E.

### The most preferred embodiment:

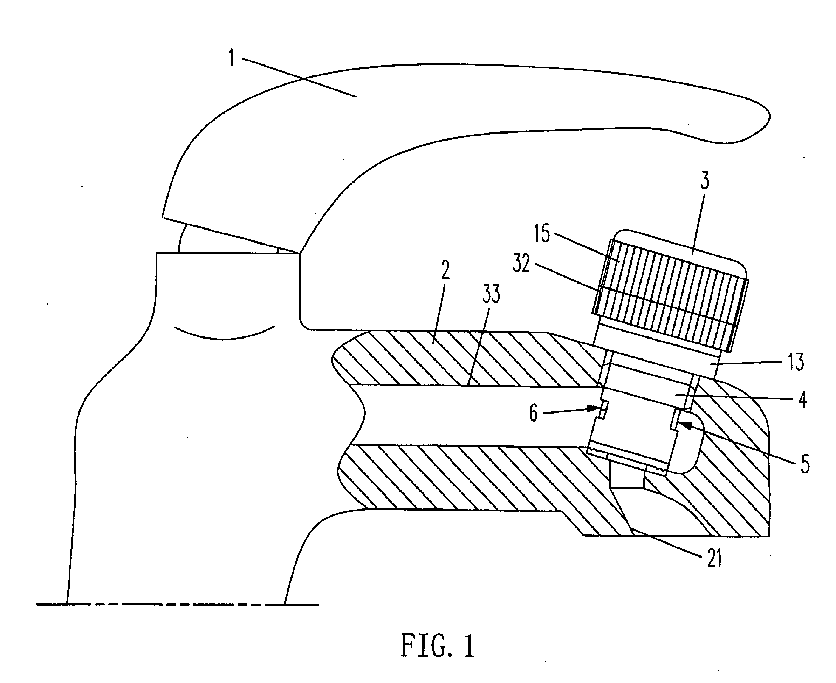

As shown in Figure 1, an upwardly and downwardly discharged faucet of the invention comprises a main handle 1 and a main valve body 2 having a main water aqueduct 33. The main valve body 2 is provided with a diverting valve 3 with dual ports.

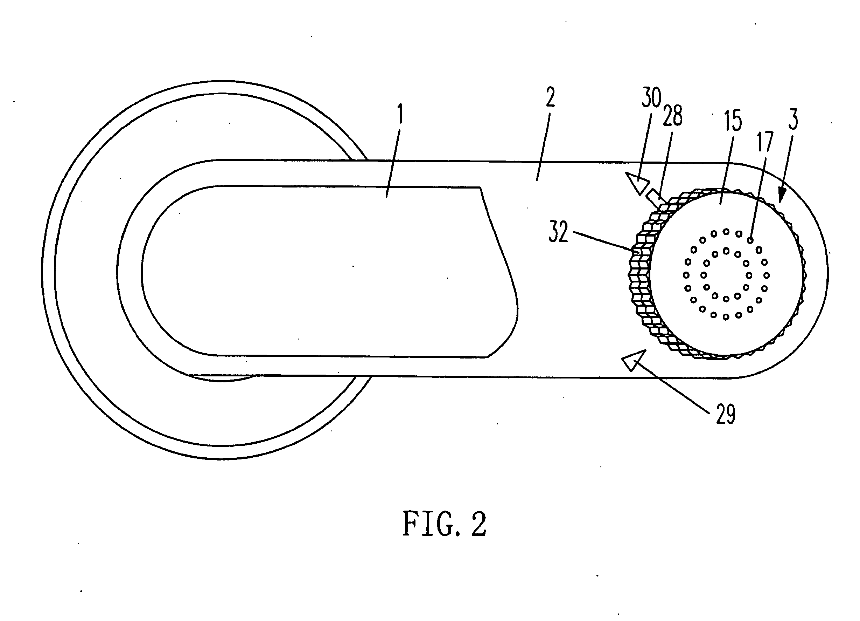

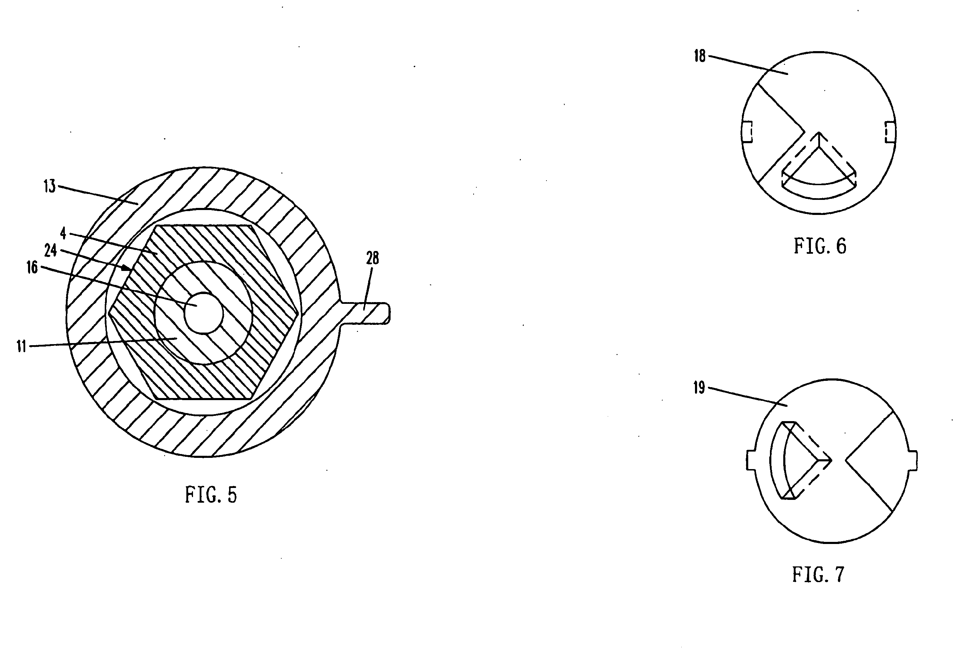

As shown in Figure 2, 3, 4, 5 and 6, the diverting valve 3 with dual ports comprises a valve seat 4. The valve seat 4 has threads on the middle part of its outside wall, and is mounted on the said valve body 2 by thread connection. On the bottom side wall of the valve seat 4 are mounted a left inlet 5 and right inlet 6 which are in communication with a main water aqueduct 33, respectively. A diverting valve core 8 is disposed within a chamber 7, and separates the top part and the bottom part of the chamber 7. The diverting valve core 8 comprises a dynamic valve core 18 and a static valve core 19. The dynamic valve core 18 is rotatably mounted within the chamber 7. The upper end face of the dynamic valve core 18 is fitted closely with the low end face of the said rotary valve stem 11, on its fitting face is disposed a sealer 22. The static valve core 19 is mounted immobily within the chamber 7. The dynamic valve core 18 and the static valve core 19 are made of ceramic materials in order to prolong its lifetime.

Within the diverting valve core 8 are disposed an upper water conduit 9 and a lower water conduit 10, in which the upper water conduit 9 is in adjustable communication with the right inlet 6, and the lower water conduit 10 is in adjustable communication with the left inlet 5. In use, the communication between the lower water conduit 10 and the left inlet 5 will be cut off if the upper water conduit 9 is in adjustable communication with the right inlet 6. On the contrary, the communication between the upper water conduit 9 and the right inlet 6 will be cut off if the lower water conduit 10 is in adjustable communication with the left inlet 5. The outlet of the lower water conduit 10 is in communication with the bottom of the chamber 7. On the upper end of the diverting valve core 8 is provided a rotary valve stem 11. The rotary valve stem 11 has a pusher dog 12 at its bottom end. The dynamic valve core 18 has grooves on its top which are fitted with the pusher dog 12. The outside wall of the middle section of the rotary valve stem 11 is fitted with the inside wall of the valve seat 4. The rotary valve stem 11 is also equipped with a manual wheel 13 on its outside wall. The manual wheel 13 and the rotary valve stem 11 are connected by spline engaging. The manual wheel 13 has a water-storage cavity 14 inside. On the top of the water-storage cavity 14 is disposed an upper water drainage head 15 having 32 spurt holes, the diameter of each spurt hole is 0.9mm. The spurt holes 17 are distributed uniformly in two circles around the center of upper water drainage head 15, the inner circle has 12 spurt holes 17, and the outer circle has 20 spurt holes. Within the rotary valve stem 11 is also disposed a water conduit 16. The water inlet of the water conduit 16 is in communication with the upper water conduit 9, and the water outlet of the water conduit 16 is in communication with a water-storage cavity 14. The chamber 7 is disposed with a liquid outlet 20 in its bottom; the liquid outlet 20 is in communication with the lower water outlet 21 of the main water aqueduct 33. A rubber sealing ring 31 is disposed at the liquid outlet 20 for sealing the gap between the bottom end face of the valve seat 4 and the main valve body 2.

The outside wall of the valve seat 4 has a flange 23 above its thread section; its side wall above the flange 23 is a hexagon 24 for tightening and mounting the valve seat 4 on the main valve body 2. The upper end face of the flange 23 is closely fitted with the manual wheel 13; a lubricating gasket 25 is disposed between its fitting faces for reducing friction resistance upon rotation of the manual wheel 13.

The outside wall of the upper section of rotary valve stem 11 is rotatably disposed with a nut 26; the lower end face of the nut 26 is fitting closely with the manual wheel 13 for mounting the manual wheel 13 on the rotary valve stem 11.

The upper water drainage head 15 is installed on the top of the manual wheel 11 by thread connection, the lower end face of the upper water drainage head 15 is disposed with a filter disk 27, and the lower end face of the filter disk is disposed with a spring for pressing the filter disk 27 with the lower end face of upper water drainage head 15. The lower plane of the filter disk 27 is fitted with the water outlet of the water conduit 16; the filter disk 27 is usable for adjusting the open area of the water outlet of the water conduit 16. The number of the spurt holes 17 is 12-60, the diameter of each spurt hole 17 may be 0.5 - 1.5mm.

The manual wheel 13 is also rotatably equipped with a round locking nut 32, the upper end face of the round locking nut 32 is supported against the upper water drainage head 15, and the outside face of the upper water drainage head 15 is knurled. When adjusting well water outflow of the water outlet of the water conduit 16, the round locking nut 32 is used to tighten against the upper water drainage head 15 such that it is not prone to move.

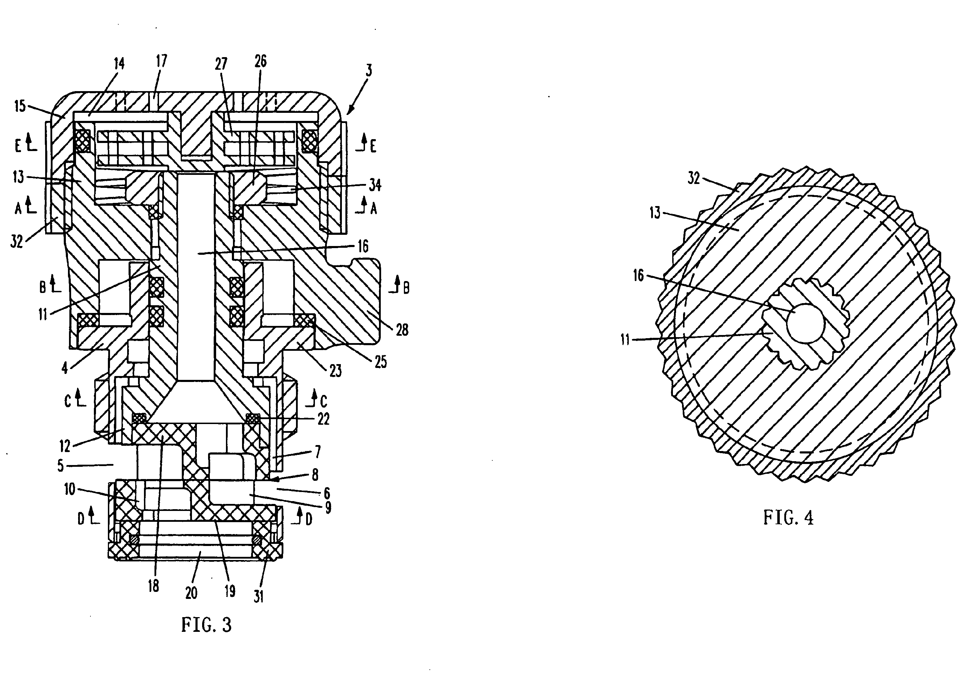

As shown in Figure 2 and 3, the manual wheel 13 is disposed with a lever 28 on its outside face; the main valve body 2 is disposed with an upper water spurt mark 29 and a lower water flow mark 30 respectively. The upper water spurt mark 29 and a lower water flow mark 30 correspond to the two extreme positions of the lever 28.

### Industrial Application

In use of the upwardly and downwardly discharged faucet of the invention, the main handle 1 on the main valve body 2 can be opened first such that tap water flows to the left inlet 5 and right inlet 6 of the diverting valve 3 with dual ports along the main water aqueduct 33 within the main valve body 2. Then the manual wheel 13 is turned by the lever 28, the lever 28 is pushed to the upper water spurt mark 29 or the lower water flow mark 30, and the manual wheel 13 will drive the rotary valve stem 11 turning. The pusher dog 12 on the bottom end of rotary valve stem 11 pushes the dynamic valve core 18 of the diverting valve core 8, and thus the upper water conduit 9 is in communication with the right water inlet 6, or the lower water conduit 10 is in communication with the left water inlet 5. Then, the tap water enters into the water conduit 16 along the upper water conduit 9, and enters into the water-storage chamber 14 from the water conduit 16. At last, tap water spurts out from 32 spurt holes 17 of the upper water drainage head 15, which can be spurred upwardly to the face of user to wash face without aids of towel, thereby achieving washing face scientifically and reducing the waste of water resource. Alternatively, tap water enters into the bottom of the chamber 7 along the lower water conduit 10, flows out downwardly from the liquid outlet 20 at the bottom of the chamber 7 via the lower water outlet 21 of the main water aqueduct 33, which can be used for washing hands, clothes, etc.

Although the aforesaid examples have been described in respect with the preferred embodiments of the present invention, it is not intended to limit the design and scope of the invention. It would be apparent to those skilled in the art that various other changes and modifications can be made without departing from the scope of the invention. Therefore it is intended to cover in the appended claims all such changes and modifications that are within the scope of this invention.

## Claims

1. An upwardly and downwardly discharged faucet comprising a main handle (1) and a main valve body (2) having a main water aqueduct (33), which is **characterized in that:**
the said main valve body (2) is provided with a diverting valve (3) with dual ports; the diverting valve (3) with dual ports comprises a valve seat (4) mounted on the main valve body (2); a left inlet (5) and right inlet (6) are in communication with the main water aqueduct (33) respectively, and are disposed on the bottom side wall of the valve seat (4); a diverting valve core (8) is disposed within a chamber (7); an upper water conduit (9) and a lower water conduit (10) are disposed within the diverting valve core 8, in which the upper water conduit (9) is in adjustable communication with the right inlet 6, and the lower water conduit (10) is in adjustable communication with the left inlet 5; the outlet of the lower water conduit (10) is in communication with the bottom of the chamber 7; a rotary valve stem 11 is disposed on the upper end of the diverting valve core 8, and has a pusher dog 12 at its bottom end; the pusher dog 12 is fitted with the diverting valve core 8; the outside wall of the middle section of the said rotary valve stem 11 is fitted with the inside wall of the said valve seat 4; the rotary valve stem 11 is equipped with a manual wheel 13 on its outside wall; the manual wheel 13 has a water-storage cavity 14 inside; an upper water drainage head 15 having at least one spurt hole (17) is disposed on the top of the water-storage cavity 14; a water conduit 16 is disposed within the rotary valve stem 11; the water inlet of the water conduit 16 is in communication with the upper water conduit 9, and the water outlet of the water conduit 16 is in communication with the said water-storage cavity 14; the chamber 7 has a liquid outlet (20) in its bottom; and the liquid outlet 20 is in communication with the lower water outlet 21 of the main water aqueduct 33.

2. The upwardly and downwardly discharged faucet according to claim 1, which is **characterized in that** the said diverting valve core (8) comprises a dynamic valve core 18 and a static valve core 19; the dynamic valve core 18 is rotatably mounted within the said chamber 7; the upper end face of the dynamic valve core 18 is fitted closely with the low end face of the said rotary valve stem 11, a sealer 22 is disposed on its fitting face; the dynamic valve core 18 has grooves on its top which are fitted with the said pusher dog 12; the static valve core 19 is installed immobily within the chamber 7; and the dynamic valve core 18 and the static valve core 19 are made of ceramic materials.

3. The upwardly and downwardly discharged faucet according to claim 2, which is **characterized in that**, the said valve seat (4) has threads on its middle part, and is installed on the main valve body 2 by thread connection; the outside wall of the valve seat (4) has a flange 23 above its thread section, its side wall above the flange 23 is a hexagon 24; the upper end face of flange 23 is closely fitted with the said manual wheel 13, and a lubricating gasket 25 is disposed between its fitting faces.

4. The upwardly and downwardly discharged faucet according to claim 3, which is **characterized in that**, the said manual wheel 13 and the rotary valve stem 11 are connected by spline engaging; the outside wall of the upper section of the rotary valve stem 11 is rotatably disposed with a nut 26; and the lower end face of the nut (26) is fitting closely with the manual wheel (13).

5. The upwardly and downwardly discharged faucet according to claim 4, which is **characterized in that**, the said upper water drainage head 15 is installed on the top of the manual wheel 11 by thread connection, the lower end face of the upper water drainage head 15 is disposed with a filter disk 27, and the lower end face of the filter disk (27) is disposed with a spring.

6. The upwardly and downwardly discharged faucet according to claim 5, which is **characterized in that** the said manual wheel 13 is also rotatably mounted with a round locking nut 32, the upper end face of the round locking nut 32 is supported against the upper water drainage head 15, and the outside face of the upper water drainage head 15 is knurled.

7. The upwardly and downwardly discharged faucet according to any of claims 1-6, which is **characterized in that** the said manual wheel 13 is disposed with a lever 28 on its outside face; the said main valve body 2 is disposed with an upper water spurt mark 29 and a lower water flow mark 30 respectively; the upper water spurt mark 29 and a lower water flow mark 30 correspond to the two extreme positions of a lever 28.

8. The upwardly and downwardly discharged faucet according to any of claims 1 to 7, which is **characterized in that** a rubber sealing ring 31 is disposed at the liquid outlet 20.

## Patentansprüche

1. Wasserhahn mit nach oben und unten führender Abflussmöglichkeit, der einen Hauptgriff (1) und einen eine Hauptwasserführung (33) aufweisenden Hauptventilkörper (2) umfasst, **dadurch gekennzeichnet, dass:**
der Hauptventilkörper (2) mit einem Umlenkventil (3) mit zwei Ventilöffnungen versehen ist; das Umlenkventil (3) mit zwei Ventilöffnungen einen am Hauptventilkörper (2) angebrachten Ventilsitz (4) aufweist; ein linker Einlass (5) bzw. ein rechter Einlass (6) in Verbindung mit der Hauptwasserführung (33) stehen und unten an der Seitenwand des Ventilsitzes (4) angeordnet sind; ein Umlenkventileinsatz (8) in einer Kammer (7) angeordnet ist; ein oberer Wasserkanal (9) und ein unterer Wasserkanal (10) innerhalb des Umlenkventileinsatzes (8) angeordnet sind, wobei der obere Wasserkanal (9) in einstellbarer Verbindung mit dem rechten Einlass (6) und der untere Wasserkanal (10) in einstellbarer Verbindung mit dem linken Einlass (5) steht; der Auslass des unteren Wasserkanals (10) in Verbindung mit dem unteren Bereich der Kammer (7) steht; ein drehbarer Ventilschaft (11) am oberen Ende des Umlenkventileinsatzes (8) angeordnet ist und an seinem unteren Ende einen Mitnehmer (12) aufweist; der Mitnehmer (12) an den Umlenkventileinsatz (8) angepasst ist; die Außenwand des mittleren Abschnitts des drehbaren Ventilschafts (11) an die Innenwand des Ventilsitzes (4) angepasst ist; der drehbare Ventilschaft (11) an seiner Außenseite mit einem Handrad (13) ausgestattet ist; das Handrad (13) innen einen Wasseraufnahmeraum (14) hat; ein oberer Wasserabströmkopf (15) mit mindestens einer Strahlbohrung (17) über dem Wasseraufnahmeraum (14) angeordnet ist; ein Wasserkanal (16) innerhalb des drehbaren Ventilschafts (11) angeordnet ist; der Wassereinlass des Wasserkanals (16) in Verbindung mit dem oberen Wasserkanal (9) und der Wasserauslass des Wasserkanals (16) in Verbindung mit dem Wasseraufnahmeraum (14) steht; die Kammer (7) einen Flüssigkeitsauslass (20) in ihrem unteren Bereich hat; und der Flüssigkeitsauslass (20) in Verbindung mit dem unteren Wasserauslass (21) der Hauptwasserführung (33) steht.

2. Wasserhahn mit nach oben und unten führender Abflussmöglichkeit nach Anspruch 1, **dadurch gekennzeichnet, dass** der Umlenkventileinsatz (8) einen beweglichen Ventileinsatz (18) und einen feststehenden Ventileinsatz (19) aufweist; der bewegliche Ventileinsatz (18) drehbar in der Kammer (7) angebracht ist; die obere Stirnfläche des beweglichen Ventileinsatzes (18) dichtend mit der unteren Stirnfläche des drehbaren Ventilschafts (11) zusammenpasst, wobei an seiner Passfläche eine Dichtung (22) vorgesehen ist; der bewegliche Ventileinsatz (18) Nuten an seiner Oberseite hat, die mit dem Mitnehmer (12) zusammenpassen; der feststehende Ventileinsatz (19) unbeweglich in der Kammer (7) eingebaut ist; und der bewegliche Ventileinsatz (18) sowie der feststehende Ventileinsatz (19) aus Keramikwerkstoffen bestehen.

3. Wasserhahn mit nach oben und unten führender Abflussmöglichkeit nach Anspruch 2, **dadurch gekennzeichnet, dass** der Ventilsitz (4) an seinem mittleren Teil mit einem Gewinde versehen und am Hauptventilkörper (2) durch eine Gewindeverbindung angebaut ist; die Außenwand des Ventilsitzes (4) über seinem Gewindeabschnitt einen Flansch (23) aufweist, wobei seine Seitenwand über dem Flansch (23) ein Sechseck (24) ist; die obere Stirnfläche des Flanschs (23) dichtend mit dem Handrad (13) zusammenpasst und eine schmierende Dichtung (25) zwischen seinen Passflächen angeordnet ist.

4. Wasserhahn mit nach oben und unten führender Abflussmöglichkeit nach Anspruch 3, **dadurch gekennzeichnet, dass** das Handrad (13) und der drehbare Ventilschaft (11) durch einen Keileingriff verbunden sind; die Außenwand des oberen Abschnitts des drehbaren Ventilschafts (11) mit einer Mutter (26) drehbar angeordnet ist; und die untere Stirnfläche der Mutter (26) dichtend mit dem Handrad (13) zusammenpasst.

5. Wasserhahn mit nach oben und unten führender Abflussmöglichkeit nach Anspruch 4, **dadurch gekennzeichnet, dass** der obere Wasserabströmkopf (15) an der Oberseite des Handrads (13) durch eine Gewindeverbindung angebaut ist, die untere Stirnfläche des oberen Wasserabströmkopfs (15) mit einer Filterscheibe (27) versehen ist, und die untere Stirnfläche der Filterscheibe (27) mit einer Feder versehen ist.

6. Wasserhahn mit nach oben und unten führender Abflussmöglichkeit nach Anspruch 5, **dadurch gekennzeichnet, dass** das Handrad (13) auch drehbar mit einer runden Sicherungsmutter (32) angebracht ist, die obere Stirnfläche der runden Sicherungsmutter (32) gegen den oberen Wasserabströmkopf (15) gedrückt ist, und die Außenfläche des oberen Wasserabströmkopfs (15) mit einer Rändelung versehen ist.

7. Wasserhahn mit nach oben und unten führender Abflussmöglichkeit nach einem der Ansprüche 1 bis 6, **dadurch gekennzeichnet, dass** das Handrad (13) an seiner Außenfläche mit einem Hebel (28) versehen ist; der Hauptventilkörper (2) mit einer Markierung (29) für einen nach oben führenden Wasserstrahl bzw. mit einer Markierung (30) für einen nach unten führenden Wasserabfluss versehen ist; wobei die Markierung (29) für den nach oben führenden Wasserstrahl bzw. die Markierung (30) für den nach unten führenden Wasserabfluss den beiden Extrempositionen des Hebels (28) entsprechen.

8. Wasserhahn mit nach oben und unten führender Abflussmöglichkeit nach einem der Ansprüche 1 bis 7, **dadurch gekennzeichnet, dass** am Flüssigkeitsauslass (20) ein Gummidichtungsring (31) angeordnet ist.

## Revendications

1. Robinet à écoulement vers le haut et vers le bas, comprenant un levier principal (1) et un corps de valve principal (2) comportant une canalisation d'eau principale (33), **caractérisé en ce que** :
ledit corps de valve principal (2) est pourvu d'une valve de dérivation (3) à doubles orifices ; la valve de dérivation (3) à doubles orifices comprend un siège de valve (4) monté sur le corps de valve principal (2) ; une entrée gauche (5) et une entrée droite (6) sont en communication avec la canalisation d'eau principale (33) respectivement et sont disposées sur la paroi latérale inférieure du siège de valve (4) ; un noyau de valve de dérivation (8) est disposé à l'intérieur d'une chambre (7) ; un conduit supérieur d'eau (9) et un conduit inférieur d'eau (10) sont disposés à l'intérieur du noyau de valve de dérivation (8), dans lequel le conduit supérieur d'eau (9) est en communication ajustable avec l'entrée droite (6) et le conduit inférieur d'eau (10) est en communication ajustable avec l'entrée gauche (5) ; la sortie du conduit inférieur d'eau (10) est en communication avec la partie inférieure de la chambre (7) ; une tige de valve rotative (11) est disposée sur l'extrémité supérieure du noyau de valve de dérivation (8) et comporte un étrier de poussée (12) à son extrémité inférieure ; l'étrier de poussée (12) est assujetti au noyau de valve de dérivation (8) ; la paroi extérieure de la section médiane de ladite tige de valve rotative (11) est assujettie à la paroi intérieure dudit siège de valve (4) ; la tige de valve rotative (11) est équipée d'un volant manuel (13) sur sa paroi extérieure ; le volant manuel (13) comporte à l'intérieur une cavité de stockage d'eau (14) ; une tête de vidange supérieure d'eau (15) comportant au moins un orifice de jet (17) est disposée sur le sommet de la cavité de stockage d'eau (14) ; un conduit d'eau (16) est disposé à l'intérieur de la tige de valve rotative (11) ; l'entrée d'eau du conduit d'eau (16) est en communication avec le conduit supérieur d'eau (9) et la sortie d'eau du conduit d'eau (16) est en communication avec ladite cavité de stockage d'eau (14) ; la chambre (7) comporte une sortie de liquide (20) dans sa partie inférieure ; et la sortie de liquide (20) est en communication avec la sortie inférieure d'eau (21) de la canalisation d'eau principale (33).

2. Robinet à écoulement vers le haut et vers le bas selon la revendication 1, **caractérisé en ce que** ledit noyau de valve de dérivation (8) comprend un noyau de valve dynamique (18) et un noyau de valve statique (19) ; le noyau de valve dynamique (18) est monté de manière à permettre sa rotation à l'intérieur de ladite chambre (7) ; la face d'extrémité supérieure du noyau de valve dynamique (18) est étroitement assujettie à la face d'extrémité inférieure de ladite tige de valve rotative (11), un dispositif d'étanchéité (22) est disposé sur sa face d'assujettissement; le noyau de valve dynamique (18) comporte des rainures sur sa partie supérieure, qui sont assujetties audit étrier de poussée (12) ; le noyau de valve statique (19) est installé de manière à être immobile à l'intérieure de la chambre (7) ; et le noyau de valve dynamique (18) ainsi que le noyau de valve statique (19) sont faits en des matériaux céramiques.

3. Robinet à écoulement vers le haut et vers le bas selon la revendication 2, **caractérisé en ce que** ledit siège de valve (4) comporte des filetages sur sa partie médiane et est installé sur le corps de valve principal (2) par une connexion par filetage ; la paroi extérieure du siège de valve (4) comporte un rebord (23) au-dessus de sa section filetée, sa paroi latérale au-dessus du rebord (23) est un hexagone (24) ; la face d'extrémité supérieure du rebord (23) est étroitement assujettie audit volant manuel (13) et un joint lubrifiant (25) est disposé entre ses faces assujetties.

4. Robinet à écoulement vers le haut et vers le bas selon la revendication 3, **caractérisé en ce que** ledit volant manuel (13) et la tige de valve rotative (11) sont connectés par engrènement de cannelures ; la paroi extérieure de la section supérieure de la tige de valve rotative (11) est disposée de manière rotative avec un écrou (26) ; et la face d'extrémité inférieure de l'écrou (26) est assujettie étroitement au volant manuel (13).

5. Robinet à écoulement vers le haut et vers le bas selon la revendication 4, **caractérisé en ce que** ladite tête de vidange supérieure d'eau (15) est installée sur le sommet du volant manuel (13) par une connexion par filetage, la face d'extrémité inférieure de la tête de vidange supérieure d'eau (15) est disposée avec un disque de filtrage (27) et la face d'extrémité inférieure du disque de filtrage (27) est disposée avec un ressort.

6. Robinet à écoulement vers le haut et vers le bas selon la revendication 5, **caractérisé en ce que** ledit volant manuel (13) est également monté de manière rotative avec un écrou de verrouillage rond (32), la face d'extrémité supérieure de l'écrou de verrouillage rond (32) est supportée contre la tête de vidange supérieure d'eau (15) et la face extérieure de la tête de vidange supérieure d'eau est moletée.

7. Robinet à écoulement vers le haut et vers le bas selon l'une quelconque des revendications 1 à 6, **caractérisé en ce que** ledit volant manuel (13) est disposé avec un levier (28) sur sa face extérieure ; ledit corps de valve principal (2) est disposé avec un repère supérieur de jet d'eau (29) et un repère inférieur d'écoulement d'eau (30), respectivement ; le repère supérieur de jet d'eau (29) et le repère inférieur d'écoulement d'eau (30) correspondent aux deux positions extrêmes du levier (28).

8. Robinet à écoulement vers le haut et vers le bas selon l'une quelconque des revendications 1 à 7, **caractérisé en ce qu'**un joint annulaire en caoutchouc (31) est disposé à la sortie de liquide (20).
